# EUROPÄISCHE PATENTANMELDUNG

(11) **EP 0 753 982 A2**
(43) Veröffentlichungstag der Anmeldung: **15.01.1997**
(21) Anmeldenummer: 96109671.6
(22) Anmeldetag: 17.06.1996
(51) Int. Cl.: H04R 1/22, H04R 1/38, H04M 1/03, H04M 1/19

(54) **Anordnung für Höreinrichtungen in Kommunikations-Endgeräten**

(30) Priorität: 12.07.1995 DE 19526810
(71) Anmelder: DeTeWe - Deutsche Telephonwerke Aktiengesellschaft & Co., 10997 Berlin (DE)
(72) Erfinder: Dalby-Jakobsen, Jorgen, 9000 Aalborg (DK)

(57) **Zusammenfassung**

Eine Anordnung zum Erzielen eines von äußeren akustischen Bedingungen unbeeinflußbaren Frequenzganges in Höreinrichtungen von Kommunikations-Endgeräten verwendet als elektroakustischen Wandler einen Dipolwandler, der derart in einem Gehäuse angeordnet ist, daß ein freier Austritt der Schallwellen der Vorder- und Rückseite des Dipolwandlers gewährleistet wird.

## Beschreibung

Die Erfindung bezieht sich auf eine Anordnung zum Erzielen eines von äußeren akustischen Bedingungen unbeeinflußbaren Frequenzganges in Höreinrichtungen von Kommunikations-Endgeräten.

Der Frequenzgang und damit die Schallabstrahlung von elektroakustischen Wandlern, wie z.B. Hörkapseln in Handapparaten von Telefonen, unterliegt vielfältigen äußeren akustischen Bedingungen des Umfeldes. So beispielsweise der Form und den Dämpfungseigenschaften des den Wandler umschließenden Gehäuses oder dem starken oder dem weniger starken Anpressen eines Hörers an das Ohr und der akustischen Impedanz.

Um die akustischen Einflüsse bezüglich der Gehäuse weitgehend zu eliminieren, sind entsprechende Konstruktionsmaßnahmen bekannt. Diese bestehen aus der Vergrößerung des Abstandes zwischen den elektroakustischen Wandlern des Hör- und des Sprechkreises (DE 41 41 257 C1), die Verwendung von Dämpfungsringen (DE 37 27 917 C2, DE 41 07 371 C2) oder das Einbringen von Fließmitteln zwischen Schallöffnungen und Wandler (DE 42 15 655 A1). Ferner sind Maßnahmen zum Unterdrücken von überlagernden Störgeräuschen durch Verwindung des Handapparates beim festen Drücken der Gehäusehälften aufeinander bekannt (DE 35 24 012 A1, DE 195 07 733.4). Die individuellen Einflüsse durch einen mehr oder weniger starke Anpressdruck an das Ohr in Verbindung mit den akustischen Bedingungen der Umwelt, sind damit nicht auszuschließen.

Der Erfindung lag die Aufgabe zugrunde, eine Lösung aufzuzeigen, die unabhängig von der Höhe des Anpressdruches eines Hörers an das Ohr immer einen akustisch unbeeinflußten Frequenzgang gemäß den Empfangssignalen gewährleistet.

Diese Aufgabe ist dadurch gelöst, daß als elektroakustischer Wandler ein Dipolwandler mit gedämpften oberen Frequenzgang verwendet wird, der derart in einem Gehäuse angeordnet ist, daß ein freier Austritt der Schallwellen der Vorder- und Rückseite des Dipolwandlers gewährleistet wird.

Weitere vorteilhafte Maßnahmen sind Gegenstand der Unteransprüche.

Der Frequenzgang solcher akustischer Dipolwandler ist unbeeinflußbar durch äußere akustische Bedingungen. D.h. ein Benutzer eines z.B. Telefonhörers hört immer nur den korrekten Frequenzgang des Empfangssignals, unabhängig vom Anpressen an oder Abstandhalten des Hörers vom Ohr. Der Dipolwandler stellt zudem sicher, daß andere Personen im Umkreis nicht durch streuende Schallabstrahlungen belästigt werden, wodurch auch gleichzeitig ein Mithöreffekt durch Dritte ausgeschlossen ist.

Die Erfindung wird nachfolgend anhand einer aus drei Figuren bestehenden Zeichnung näher erläutert. Darin zeigen die
- Fig. 1: das Prinzip des Schallwellenaustrittes eines akustischen Dipolwandlers bei einem Fernsprech-Handapparat, die
- Fig. 2: eine konstruktive Variante und die
- Fig. 3: die Darstellung des Schallellenaustrittes beim Ansetzen eines Meßkopplers bzw. Anlegen eines Ohres.

In allen Figuren tragen gleiche Ausformungen dieselben Bezugszeichen.

In der Nähe von Schallfeldern eines akustischen Dipolwandlers sind die Schallwellen gerichtet und erzeugen einen Druckgradienten. Die Nahfeld-Frequenz eines akustischen Dipolwandlers ist ausschließlich durch die Wandlercharakteristik bestimmt. Unter der Annahme, daß die akustische Streuung zwischen Vorder- und Rückseite des Dipolwandlers einem Kurzschluß entspricht, ist der Frequenzgang unbeeinflußbar durch äußere akustische Belastungen, die auf z.B. einen Telefonhörer einwirken. Der Frequenzgang des Dipolwandlers wird durch entsprechende bekannte Maßnahmen gedämpft.

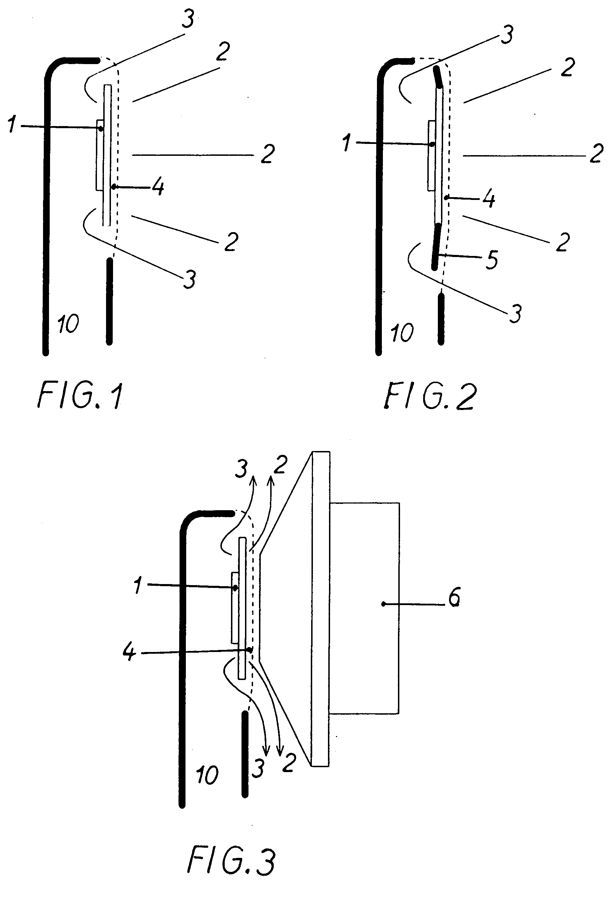

Entsprechend diesen technischen Gegebenheiten ist ein akustischer Dipolwandler in z.B einem Gehäuse 10 eines Handapparates eines Kommunikations-Endgerätes anzuordnen. In der Fig. 1 ist das Prinzip der Anordnung dargestellt. Der Dipolwandler 1 ist so zu plazieren, daß die Schallwellen 2 der Vorderseite wie auch die Schallwellen 3 der Rückseite einen freien Austritt haben.

Zum Steuern des unteren Frequenzganges und der Ausbreitung der Schallwellen wird der Dipolwandler z. B. in einen Schallschirm 5 gesetzt, wie in der Fig. 2 gezeigt. Unerwünschten Reflexionen von anderen Teilen innerhalb des Gehäuses 10 wird durch Einbringen von akustischem Dämmaterial in das Gehäuse 10 vorgebeugt.

Um den freien Durchgang der Schallwellen 2,3 bei Anlegen eines Meßkopfes 6 , nach der Fig. 3, oder das Anpressen eines Ohres zu gewährleisten, ist ein entsprechender Abstand 4 zwischen Vorderseite des Dipolwandlers 1 und dem Gehäuse 10 vorzusehen.

## Patentansprüche

1. Anordnung zum Erzielen eines von äußeren akustischen Bedingungen unbeeinflußbaren Frequenzganges in Höreinrichtungen von Kommunikations-Endgeräten, dadurch gekennzeichnet, daß als elektroakustischer Wandler ein Dipolwandler (1) verwendet wird, der derart in einem Gehäuse (10) angeordnet ist, daß ein freier Austritt der Schallwellen (2,3) der Vorder- und Rückseite des Dipolwandlers (1) gewährleistet wird.

2. Anordnung nach Anspruch 1, dadurch gekennzeichnet, daß der Dipolwandler (1) in einen Schallschirm (5) gesetzt ist.

3. Anordnung nach Anspruch 1 und 2, dadurch gekennzeichnet, daß zwischen der Vorderseite des Dipolwandlers (1) bzw. dessen Schallschirm (5) und dem Gehäuse (10) ein Abstand (4) besteht.

4. Anordnung nach Anspruch 1 bis 3, dadurch gekennzeichnet, daß zum Unterdrücken von Reflexionen Dämmaterial in das Gehäuse (10) eingebracht ist.
